# EUROPÄISCHE PATENTSCHRIFT

(11) **EP 4 466 188 B1**
(45) Veröffentlichungstag und Bekanntmachung des Hinweises auf die Patenterteilung: **02.09.2026**
(21) Anmeldenummer: 22844062.4
(22) Anmeldetag: 22.12.2022
(51) Int. Cl.: B65B 17/02, B65B 21/06, B65B 35/36, B65G 47/08, B65B 35/30, B65B 63/02, B65G 15/14, B65B 59/00, B65B 59/04

(54) **GEBINDEBILDEVORRICHTUNG SOWIE VERFAHREN ZUM WECHSEL VON TRANSPORTGRUPPEN**
BUNDLE FORMING DEVICE AND METHOD FOR CHANGING TRANSPORT GROUPS
DISPOSITIF DE FORMATION D'EMBALLAGES ET PROCÉDÉ DE CHANGEMENT DE GROUPES DE TRANSPORT

(30) Priorität: 17.01.2022 DE 102022100928
(43) Veröffentlichungstag der Anmeldung: 27.11.2024
(73) Patentinhaber: KHS GmbH, 44143 Dortmund (DE)
(72) Erfinder: VAN HEUKELUM, Stefan, 47559 Kranenburg (DE)
(86) Internationale Anmeldenummer: PCT/EP2022/087414
(87) Internationale Veröffentlichungsnummer: WO 2023/134997

(56) Entgegenhaltungen:
- WO-A1-2015/028362
- WO-A1-2018/210698
- DE-A1- 102018 109 770
- DE-A1- 102019 119 809

## Beschreibung

Die vorliegende Erfindung betrifft eine Gebindebildevorrichtung mit zwei einander gegenüberliegenden Transporteinrichtungen, wobei die Transporteinrichtungen ausgebildet sind, Behälter mittels jeweils einer Vielzahl umlaufend bewegbaren Führungselemente zu Gebinden zu gruppieren und entlang parallel zueinander angeordneter Transportstrecken zu bewegen, wobei die Führungselemente entlang einer umlaufenden Führungsbahn der Transporteinrichtungen bewegbar sind.

Gebindebildevorrichtungen der eingangs beschriebenen Art sind grundsätzlich aus dem Stand der Technik bekannt und werden beispielsweise dazu verwendet, Behälter zu Gebinden zusammenzufassen und miteinander zu fixieren. Insbesondere bezieht sich die Erfindung auf Gebindebildevorrichtungen in der Getränkeindustrie, wobei es sich dann bei den Behältern um Getränkebehälter, beispielsweise um Flaschen aus Kunststoff oder Glas oder aber um Getränkedosen, handeln kann.

Die Behälter werden zunächst in einer Getränkeabfüllanlage mit dem entsprechenden Füllmedium befüllt und dann ggf. nach weiteren Behandlungsschritten, wie z. B. einer Etikettierung, einer entsprechenden Gebindebildevorrichtung zugeführt. Die Größe und Ausgestaltung der in der Gebindebildevorrichtung zu bildenden Gebinde bemisst sich hierbei anhand der gruppierten Führungselemente sowie anhand der beiden Transportstrecken. Zur Ausbildung von sogenannten Sixpacks werden entsprechend jeweils drei Führungselemente einer Transporteinrichtung miteinander gruppiert und mit einer entsprechenden weiteren Transportgruppe der jeweils anderen Transportvorrichtung zusammengefasst.

Eine gattungsgemäße Ausgestaltung ist beispielsweise aus der EP 3 038 927 B1 bekannt. Gemäß dieser Druckschrift werden die einzelnen Behälter zur Bildung der Gebinde mittels eines Klebstoffes miteinander fixiert. Hierzu wird zunächst an diskreten Stellen der Behälter ein Klebstoff aufgebracht und sodann die Behälter über die Klebstoffstellen miteinander verbunden. Um eine ausreichende Verbundkraft zwischen den Behältern der ersten Transporteinrichtung und den Behälter der zweiten Transporteinrichtung zu erzeugen, sind die beiden Transporteinrichtungen so zueinander angeordnet, dass die darin transportierten Behältern zu einem gewissen Maße gegeneinander gepresst werden. Zur Führung der Behälter in den Transporteinrichtungen sind Führungselemente vorgesehen, welche umlaufend an den Transporteinrichtungen bewegt werden. Als Antriebseinrichtung ist für die Führungselemente ein Kettenantrieb vorgesehen, welcher über einen Bolzen mit den Führungselementen verbunden ist.

Die einzelnen Führungselemente sind üblicherweise in sogenannten Transportgruppen zusammengefasst, deren Größe sich insbesondere nach dem anzufertigenden Gebinde bemisst. Sofern beispielsweise ein Gebinde aus insgesamt sechs Behältern (Six-Pack) gebildet werden soll, so werden pro Transporteinrichtung insgesamt drei Führungselemente zu einer Transportgruppe zusammengefasst, wobei sich dann die Größe des Gebindes aus der Größe der beiden zueinander ausgerichteten Transportgruppen der beiden Transporteinheiten ergibt.

In der Praxis ist jedoch häufig erforderlich, diese Transportgruppen nach gewissen Zeitabständen auszutauschen, da beispielsweise Gebinde mit einer unterschiedlichen Größe oder aber Gebinde mit unterschiedlichen Behälterdurchmessern gebildet werden sollen. Hierbei ist zu beachten, dass die einzelnen Transportgruppen üblicherweise aus mechanisch miteinander verbundenen Führungselementen gebildet werden und so ein Austausch von vollständigen Transportgruppen erforderlich ist. Hierzu schlägt die DE 10 2019 119 809 A1 vor, dass die einzelnen Transportgruppen über einen klappbaren Verbindungsbolzen von der Antriebseinrichtung getrennt werden können. Die Führungsbahn wird dann an einer geeigneten Stelle geöffnet, sodass die einzelnen Führungseinheiten in einfacher Art und Weise ausgetauscht werden können. In welcher Art und Weise die Öffnung der Führungsbahn erfolgt, geht aus diesem Dokument nicht hervor.

Aus der Praxis ist es jedoch bekannt, dass ein Abschnitt der Führungsbahn nach außen verschoben wird und somit gegenüber den angrenzenden Abschnitten der Führungsbahn vorsteht. Mit diesem Abschnitt wird auch eine darauf angeordnete Transportgruppe nach außen versetzt und kann dann durch seitliches Verschieben entnommen werden. Die neue Transportgruppe wird dann ebenfalls durch seitliches Einschieben auf diesem Abschnitt angeordnet und der nach außen versetzte Abschnitt wird durch Verschieben nach innen wieder fluchtend mit den angrenzenden Abschnitten der Führungsbahn angeordnet. Dieser Vorgang wird so lange wiederholt, bis sämtliche Transportgruppen bzw. alle erforderlichen Transportgruppen ausgewechselt worden sind.

Dieses Prinzip hat sich grundsätzlich bewährt. Allerdings ist es aufgrund der Einzelentnahme der Transportgruppen sehr zeitaufwendig und der Vorgang daher auch mit langen Stillstandzeiten der Gebindebildevorrichtung verbunden.

Der vorliegenden Erfindung liegt die Aufgabe zugrunde, eine Gebindebildevorrichtung anzugeben, die sich durch einen leichteren und schnelleren Austausch der Führungselemente bzw. der Transportgruppen von Führungselementen auszeichnet.

Lösung dieser Aufgabe und Gegenstand der Erfindung ist eine Gebindebildevorrichtung gemäß Patentanspruch 1.

Dementsprechend ist vorgesehen, dass die Führungsbahnen jeweils einen zwischen einer Austauschposition und einer Betriebsposition verstellbaren Austauschabschnitt zum Austausch von Führungselementen aufweisen, wobei der Austauschabschnitt in der Austauschposition gegenüber angrenzenden Abschnitten der umlaufenden Führungsbahn nach innen versetzt angeordnet ist.

Hierbei geht die Erfindung von der Erkenntnis aus, dass bei einer umlaufenden und damit im Wesentlichen ovalförmigen Führungsbahn der Austauschabschnitt nach innen versetzt wird, sodass die angrenzenden Abschnitte der Führungsbahn gegenüber diesem Austauschabschnitt vorstehen. Entsprechend können die einzelnen Führungselemente bzw. ganze aus Führungselementen gebildete Transportgruppen durch ein seitliches Verschieben aus den angrenzenden Abschnitten der Führungsbahn entnommen werden, da der Austauschabschnitt eine Entnahme aus den angrenzenden Abschnitten der Führungsbahn nicht blockiert.

Im Gegensatz dazu ist es gemäß der aus dem Stand der Technik bekannten Ausgestaltung lediglich möglich, die auszutauschenden Führungselemente zusammen mit dem Austauschabschnitt zu verfahren und sodann zu entnehmen. Hierdurch ist die Anzahl der gleichzeitig auszutauschenden Führungselemente begrenzt. Gemäß der vorliegenden Erfindung können gleichzeitig eine Vielzahl von Führungselementen bzw. eine Vielzahl von Transportgruppen aus der Führungsbahn entnommen werden bzw. eine Vielzahl von Führungselementen oder Transportgruppen ausgetauscht werden, ohne dass eine Verstellung des Austauschabschnittes erforderlich ist. Hierdurch kann der gesamte Austausch sehr viel schneller und effizienter vorgenommen werden, wodurch sich die hierfür erforderliche Stillstandzeit der Gebindebildevorrichtung auf ein erforderliches Minimum reduzieren lässt.

Gemäß einer bevorzugten Ausgestaltung der Erfindung ist der Austauschabschnitt jeweils für die Transporteinrichtungen auf einer der jeweiligen Transportstrecke abgewandten Seite der Führungsbahn gebildet. Ausgehend von einer umlaufenden Führungsbahn handelt es sich somit um außenliegende Abschnitte der Führungsbahn, welche von außen besonders gut zugänglich sind. Im Bereich der Transportstrecken steht hingegen nur ein sehr begrenzter Raum zum Wechsel von Führungselementen zur Verfügung.

Der Austauschabschnitt ist ferner bevorzugt außerhalb eines Kurvenbahnabschnittes an einem im Wesentlichen geraden Abschnitt der Führungsbahn gebildet, sodass dieser besonders leicht nach innen versetzt werden kann. Hierbei ist zu beachten, dass die Transporteinrichtungen üblicherweise mit einem im Wesentlichen geraden Transportabschnitt entlang der Transportstrecke und einem gegenläufigen ebenfalls im Wesentlichen geraden Rückführabschnitt ausgebildet ist, wobei der Transportabschnitt und der Rückführabschnitt endseitig jeweils mit einem Kurvenbahnabschnitt miteinander verbunden sind. Entsprechend ist der Austauschabschnitt dann in dem Rückführabschnitt der Transporteinrichtung gebildet.

Gemäß einer besonders bevorzugten Ausgestaltung der Erfindung weist der Austauschabschnitt eine Länge auf, welche zwischen 3 und 10 % der gesamten Führungsbahn entspricht. Hierbei ist die Länge insbesondere so bemessen, dass zumindest eine Transportgruppe in dem Bereich des Austauschabschnittes angeordnet werden kann. Somit ist es möglich, die Transportrichtungen durch Verschieben aus der Führungsbahn in den Bereich des Austauschabschnittes zu bewegen und dann zu entnehmen. Ein deutlich längerer Austauschabschnitt ist hingegen nicht erforderlich, da die einzelnen Transportgruppen nacheinander aus der Führungsbahn entnommen und entsprechend auch neue Transportgruppen wieder eingesetzt werden können.

Entsprechend kann die Länge des Austauschabschnittes auch anhand der Größe der Transportgruppen bestimmt werden, wobei der Austauschabschnitt einer bevorzugten Länge zwischen dem 0,8-fachen und dem 1,5-fachen der Breite einer Transportgruppe umfasst, welche aus mehreren, insbesondere zwei, drei oder vier hintereinander angeordneten Führungselementen gebildet ist. Somit ist der Austauschabschnitt zumindest dazu ausgebildet Transportgruppen aus mehreren, beispielsweise insgesamt zwei, drei oder vier Führungselementen zu entnehmen. Besonders bevorzugt sollen Transportgruppen von zumindest vier Behältern entnehmbar sein.

Gemäß einer Weiterbildung der Erfindung sind die Führungselemente mit einer Antriebseinrichtung versehen, wobei es sich bei der Antriebseinrichtung bevorzugt um einen Zahnriemenantrieb oder um einen Kettenantrieb handelt. Kettenantriebe sind bereits hinlänglich aus dem Stand der Technik bekannt. Bei Zahnriemenantrieben handelt es sich um eine Antriebsform, bei der ein sogenannter Transportriemen auf einer Seite mit einer Zahnung ausgebildet ist, wobei die Zahnung formschlüssig in gezahnte Antriebsscheiben eingreift. Durch Rotation dieser Antriebsscheiben werden sodann auch die Transportriemen sowie die an diesen angeordneten Elemente bewegt. Der Transportriemen ist üblicherweise aus einem Kunststoff gefertigt. Im Rahmen der Erfindung hat sich besonders ein Transportriemen aus Neopren bzw. Chloropren-Kautschuk als besonders vorteilhaft erwiesen. Gegenüber den üblicherweise eingesetzten Kettenantrieben zeichnen sich Zahnriemenantriebe durch eine besonders hohe Formbeständigkeit aus, wobei insbesondere die Problematik einer Kettenlängung entfällt.

Zur Verbindung mit der Antriebseinrichtung weisen die Führungselemente oder aber zumindest ein Führungselement einer Transportgruppe einen verstellbaren Bolzen oder einen verstellbaren Bolzenabschnitt auf. Über diesen Bolzen oder Bolzenabschnitt kann dann das entsprechende Führungselement mit der Antriebseinrichtung verbunden werden. Hierzu weist die Antriebseinrichtung üblicherweise ein Kupplungselement, z. B. in Form einer Bohrung oder in Form einer Nut, auf, in das dann der Bolzen bzw. der Bolzenabschnitt des Führungselementes eingreift. Über das Kupplungselement wird dann in Bezug auf die Vortriebsrichtung der jeweiligen Transporteinrichtung ein Formschluss bewirkt, sodass infolge eines Vortriebs der Antriebseinrichtung, z. B. in Form der Kette oder in Form des Zahnriemens, auch ein Vortrieb der Führungselemente bzw. der in Transportgruppen angeordneten Führungselemente bewirkt wird. Der Bolzen kann hierbei beispielsweise vollständig entnommen werden. Bevorzugt ist jedoch eine Ausgestaltung, bei der ein Bolzenabschnitt verstellbar, z. B. klappbar, unmittelbar an zumindest einem Teil der Führungselemente angeordnet ist. Entsprechend können die Führungselemente, welche ursprünglich mit der Antriebseinrichtung verbunden sind, durch ein einfaches Umklappen von der Antriebseinrichtung gelöst werden, sodass dann eine einfache Entnahme der Führungselemente möglich ist.

Wie bereits ausführlich erläutert, sind die Führungselemente in Transportgruppen gruppiert, wobei sich die Größe der Transportgruppen nach der Größe der zu bildenden Gebinde orientiert. Gemäß einer solchen Ausgestaltung sind die einzelnen Führungselemente innerhalb einer Transportgruppe vorzugsweise miteinander verbunden, sodass während der Bewegung entlang der Führungsbahn deren Position relativ zueinander festgelegt ist. Ausgehend von einer solchen Ausgestaltung ist es dann auch lediglich erforderlich, dass nur eines dieser Führungselemente mit der Antriebseinrichtung verbunden ist, wobei dieses Führungselement auch die Bewegung der jeweils anderen Führungselemente innerhalb einer Transportgruppe bewirkt. Eine solche Ausgestaltung ist besonders deshalb vorteilhaft, da insbesondere in Kurvenfahrten ein gewisses Auffächern der Kupplungselemente der Antriebseinrichtungen einsetzen kann. Sofern also die Führungselemente einer Transportgruppe nicht miteinander verbunden wären, so hätte das zur Folge, dass die Bewegung der Führungselemente zueinander ebenfalls in einem gewissen Maße auffächern würde. Darüber hinaus können auch die einzelnen Transportgruppen sehr viel schneller mit der Antriebseinrichtung verbunden bzw. gelöst werden, da lediglich ein Bolzen bzw. Bolzenabschnitt pro Transportgruppe von der Antriebseinrichtung gelöst bzw. verbunden werden muss.

Bevorzugt sind jeweils zwischen 50 und 150, besonders bevorzugt zwischen 80 und 120 Führungselemente in den Transporteinrichtungen angeordnet. Die Transportgruppen weisen bevorzugt eine Größe von 2, 3, 4 oder mehr Führungselementen auf. Darüber hinaus sind die Führungselemente auch bezüglich ihrer Form nicht beschränkt, so können beispielweise Führungselemente mit einer unterschiedlichen Anlagefläche vorgesehen sein, wobei die Anlagefläche dazu bestimmt ist, während dem Durchlaufen der Transportstrecke an dem zu transportierenden Behälter anzulegen. Beispielsweise können dann unterschiedliche Anlagenflächen für unterschiedliche Behälterdurchmesser vorgesehen sein.

Vorzugsweise sind die Führungselemente als Schlitten ausgebildet. Die Führungselemente können z. B. jeweils mehrere Rollen aufweisen, mittels welcher die Führungselemente an den Führungsbahnen geführt sind. Das jeweilige Führungselement kann beispielsweise mindestens einen Anpresskopf, vorzugsweise mindestens zwei übereinander angeordnete Anpressköpfe mit je einer Anlagefläche für einen Behälter aufweisen. Bei den Anpressköpfen handelt es sich zweckmäßigerweise um Formatteile.

Eine bevorzugte Ausgestaltung der Erfindung sieht vor, dass der Austauschabschnitt aus einem Kunststoffmaterial gebildet ist. Darüber hinaus kann der Austauschabschnitt auch an seinen Enden mit einem Einlauf und/oder einem Auslaufbogen gebildet sein. Diese Bögen liegen dann in einem Betriebszustand unterhalb einem Überlappungsbereich der angrenzenden Abschnitte der Führungsbahn. Hierdurch wird sichergestellt, dass im Betriebszustand keine Lücke zwischen dem Austauschabschnitt und den angrenzenden Abschnitten der Führungsbahn vorgesehen ist. Eine Lücke hätte zur Folge, dass die Führungselemente für einen kurzen Moment freiliegen würden, wodurch die Bewegung ein Stück weit gestört würde. Dies wäre zugleich auch mit einer erhöhten Lärmbelästigung verbunden.

Gemäß einer bevorzugten Ausgestaltung ist den Transporteinrichtungen jeweils eine Klebstoffapplikationseinrichtung zum Aufbringen eines Klebstoffes auf die Behälter in Produktionsrichtung vorgeschaltet. Demnach ist die Gebindebildevorrichtung dazu vorgesehen, nicht nur die einzelnen Behälter über die Transportgruppen miteinander zu gruppieren. Vielmehr soll auch eine Fixierung erfolgen, wozu die Behälter über die Führungselemente in den einzelnen Transporteinrichtungen einem gewissen Maße gegeneinander verpresst werden und wobei der in Klebstoffapplikationseinrichtung aufgebrachte Klebstoff entlang der Transportstrecke aushärten kann.

Gegenstand der Erfindung ist ferner ein Verfahren zum Wechseln von aus Führungselemente gebildeten Transportgruppen in einer erfindungsgemäßen Gebindebildevorrichtung gemäß Patentanspruch 12.

Demnach sieht das erfindungsgemäße Verfahren vor, dass der Austauschabschnitt zunächst gegenüber angrenzenden Abschnitten der Führungsbahn verstellt wird und wobei anschließend zumindest zwei Transportgruppen aus der Führungsbahn entnommen und/oder in die Führungsbahn eingesetzt werden.

Wie bereits zuvor erläutert, ergibt sich bei der erfindungsgemäßen Ausgestaltung der Vorteil, dass nunmehr die Transportgruppen unmittelbar über die angrenzenden Abschnitte der Führungsbahn entnommen werden können, sodass nach einem Verstellen des Austauschabschnittes in eine nach innenliegende Richtung eine gruppenweise Entnahme von Transportelementen möglich ist.

Insbesondere sieht das Verfahren vor, das zunächst zumindest zwei Transportgruppen aus der Führungsbahn entnommen zumindest zwei andere Transportgruppen in die Führungsbahn eingesetzt werden, während der Austauschabschnitt in die Austauschposition verfahren wurde.

Gemäß einer bevorzugten Weiterbildung des Verfahrens werden zumindest die zu entnehmenden Transportgruppen vor der Entnahme von der Antriebseinheit gelöst und so zueinander verschoben, sodass der Austauschabschnitt der Führungsbahn freiliegt, also nicht mit Führungselementen belegt ist. Beispielsweise können die Transportgruppen durch Entnahme eines Bolzens entnommen werden, über die zumindest ein Führungselement der Transportgruppe mit der Antriebseinheit verbunden ist. Alternativ weist zumindest ein Führungselement der Transportgruppen einen verstellbaren Bolzenabschnitt auf, sodass über ein Umklappen oder eine anderweitige Art der Verstellung eine Trennung zwischen Antriebseinrichtung und Transportgruppe möglich ist. Sodann liegen die gelösten Transportgruppen auf der Führungsbahn frei und können relativ zueinander verschoben werden. Hierbei werden grundsätzlich so viele Transportgruppen von der Antriebseinrichtung getrennt, dass durch ein Verschieben relativ zueinander der Austauschabschnitt freigelegt werden kann. Der Austauschabschnitt wird dann ohne eine Transportgruppe durch ein Bewegen nach innen in die Austauschposition gebracht und sodann werden die Transportgruppen entnommen bzw. eingesetzt.

Bevorzugt ist vorgesehen, dass der Austauschabschnitt nach Abschluss eines Austauschschrittes wieder in die Betriebsposition bewegt wird. Ein Austauschschritt umfasst üblicherweise die Entnahme von zumindest zwei Transportgruppen und das Einsetzen von anderen zumindest zwei Transportgruppen. Unter der Betriebsposition wird im Rahmen der Erfindung eine Stellung des Austauschabschnittes bezeichnet, bei der dieser fluchtend mit den angrenzenden Abschnitten der Führungsbahn anliegt, sodass entsprechend die Führungselemente umlaufend entlang der Führungsbahn bewegt werden können.

Eine Ausgestaltung der Erfindung sieht ferner vor, dass zum Austausch der Führungselemente mehrere Austauschschritte hintereinander durchgeführt werden. Um somit sämtliche Transportgruppen auswechseln zu können, wird der Austauschabschnitt mehrmals in die Austauschposition bewegt und sodann werden jeweils zumindest zwei Transportgruppen entnommen und eingesetzt. Bevorzugt sind zwischen zwei und fünf Austauschschritten vorgesehen. Eine besonders bevorzugte Ausgestaltung sieht insgesamt drei Austauschschritte vor. Ausgehend von einer exemplarischen Ausgestaltung mit 96 Führungselementen pro Transporteinrichtung ergeben sich beispielsweise bei einer Ausgestaltung von Transportgruppen zu je vier Führungselementen insgesamt 24 Transportgruppen. Insgesamt können dann drei Austauschschritte vorgesehen sein, bei der jeweils acht Transportgruppen entnommen und durch neue Transportgruppen ersetzt werden können. Eine solche Ausgestaltung hat sich als besonders vorteilhaft erwiesen, da nicht alle Transportgruppen gleichzeitig von der Antriebseinrichtung gelöst werden können. Durch die umlaufende Anordnung befinden sich insbesondere eine Vielzahl der Transportgruppen entlang der nicht einfach zugänglichen Transportstrecke oder in den Kurvenbahnabschnitten der Führungsbahn.

Eine Weiterbildung des Verfahrens sieht vor, dass eine erste Art von Transportgruppen aus der Führungsbahn entnommen und eine zweite Art von Führungsgruppen in die Führungsbahn eingebracht wird. Entsprechend handelt es sich um einen Wechsel von Transportgruppen, wobei sich die Transportgruppen voneinander unterscheiden. Alternativ ist es aber auch selbstverständlich denkbar, dass einzelne Transportgruppen durch eine gleiche Art von Transportgruppen ersetzt werden. Dies kann beispielsweise dann vorgesehen sein, wenn einzelne Transportgruppen beschädigt sind und ausgetauscht werden müssen. Bevorzugt erfolgt jedoch ein Austausch von unterschiedlichen Arten von Transportgruppen. Hierdurch können beispielsweise die Größe der Gebinde oder aber auch die Art der transportierten Behälter verändert werden.

Insbesondere ist vorgesehen, dass sich die erste Art von Transportgruppen von der zweiten Art der Transportgruppen hinsichtlich der Anzahl und/oder Ausgestaltung der Führungselemente voneinander unterscheiden. Beispielsweise kann eine unterschiedliche Form beispielsweise eine unterschiedliche Anlagefläche für die Behälter bedeuten. So muss dieser Anlagefläche für unterschiedlich große Behälter auch eine unterschiedlich starke Krümmung aufweisen.

Im Folgenden wird die Erfindung anhand eines Ausführungsbeispiels näher erläutert. Es zeigen:
- Fig. 1: die erfindungsgemäße Gebindebildevorrichtung in einer isometrischen Darstellung,
- Fig. 2: die Gebindebildevorrichtung gemäß Fig. 1 ohne Führungselemente,
- Fig. 3A bis 3D: die Verfahrensschritte zur Entnahme von Führungselementen,
- Fig. 4A und 4B: die Verfahrensschritte zum Einsetzen von Führungselementen.

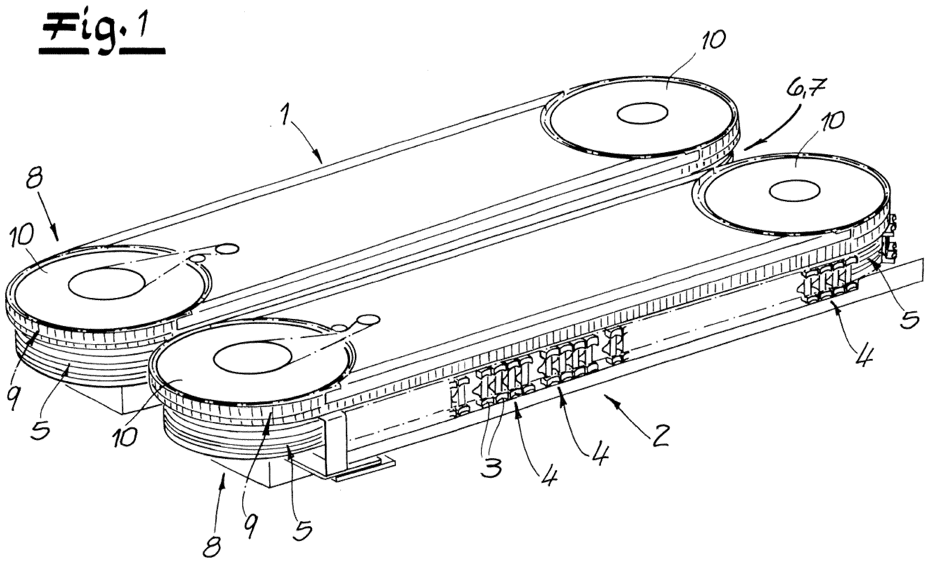

Die Fig. 1 zeigt eine erfindungsgemäße Gebindebildevorrichtung mit zwei einander gegenüberliegenden Transporteinrichtungen 1, 2, wobei die Transporteinrichtungen 1, 2 ausgebildet sind nicht näher dargestellte Behälter mit jeweils einer Vielzahl umlaufend bewegbarer Führungselemente 3 zu Gebinden zu gruppieren. Hierzu sind die Führungselemente 3 in Transportgruppen 4 zu beispielhaft je vier Führungselementen 3 zusammengefasst, sodass insgesamt pro Transportgruppe 4 vier Behälter transportierbar sind. Über die Führungselemente 3 der Transportgruppen 4 werden diese Behälter sodann entlang einer umlaufenden Führungsbahn 5 zu Transportstrecken 6, 7 befördert, in denen sich die Führungselemente 3 der Transporteinrichtung 1 und die Führungselemente 3 der Transporteinrichtung 2 unmittelbar gegenüberliegen. Wie aus Fig. 1 ersichtlich ist, befinden sich die beiden parallel zueinander verlaufenden Transportstrecken 6, 7 zwischen den beiden Transporteinrichtungen 1, 2. Die Behälter können hierbei gemäß einer bevorzugten Ausgestaltung vor der Zuführung in die Transportstrecken 6, 7 einer Klebstoffapplikationseinrichtung zugeführt werden, in der die Behälter an diskreten Stellen mit einem Klebstoff beaufschlagt werden. Innerhalb der Transportstrecken 6, 7 werden dann aufgrund der Anordnung der Transporteinrichtungen 1, 2 zueinander die Behälter über die Führungselemente 3 zu einem gewissen Maße einander gepresst und so miteinander verklebt, wobei der Klebstoff entlang den Transportstrecken 6, 7 aushärten kann. Ausgehend von einer Ausbildung von vier Führungselementen 3 pro Transportgruppe 4 können somit Gebinde zu je acht Behältern ausgebildet werden.

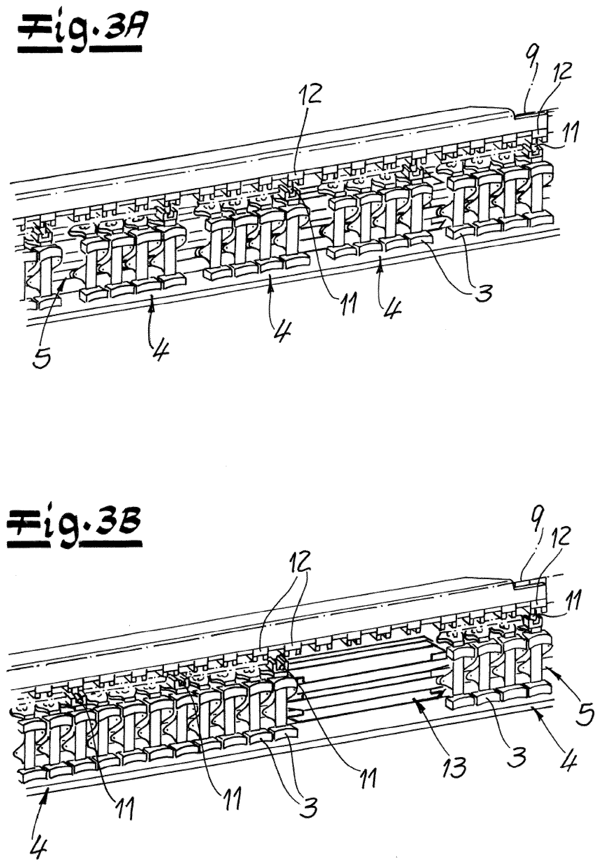

Zum Antrieb der Führungselemente 3 bzw. der Transportgruppen 4 weisen die Transporteinrichtungen 1, 2 jeweils eine Antriebseinrichtung 8 auf, welche als Zahnriemenantrieb ausgebildet ist, sodass entsprechend ein Transportriemen 9 über Antriebsscheiben 10 umlaufend bewegt wird. Die Transportgruppen 4 sind hierbei mit dem Transportriemen 9 verbunden. Eine vergleichende Ansicht mit der Fig. 3A zeigt, dass pro Transportgruppe 4 jeweils ein Führungselement 3 mit einem verstellbaren Bolzenabschnitt 11 in ein mit einer Nut ausgebildetes Kupplungselement 12 des Transportriemens 9 eingreift. Der Bolzenabschnitt 11 liegt dann bezüglich der Vortriebrichtung formschlüssig in der Nut an, sodass durch eine Bewegung des Transportriemens 9 auch eine Bewegung der Transportgruppen 4 bewirkt wird. Die einzelnen Führungselemente 3 innerhalb der Transportgruppe 4 sind unmittelbar mechanisch miteinander verbunden, sodass es lediglich erforderlich ist, dass eines der Führungselemente 3 mit der Antriebseinrichtung 8 verbunden ist.

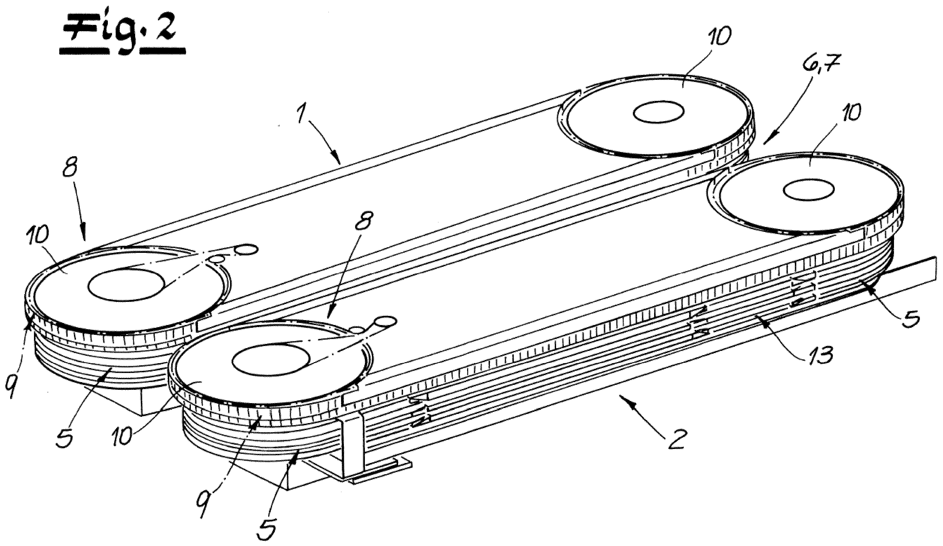

Die Fig. 2 zeigt die Gebindebildevorrichtung gemäß der Fig. 1 ohne Führungselemente 3, wobei in diesem Zusammenhang auch anzumerken ist, dass auch in der Fig. 1 nicht alle innerhalb der Führungsbahn 5 vorgesehenen Führungselemente 3 dargestellt sind. Durch die nicht näher dargestellten Führungselemente 3 ist allerdings ersichtlich, dass die Führungsbahn 5 einen Austauschabschnitt 13 aufweist, welcher bei den Transportvorrichtungen 1, 2 auf einer jeweiligen Transportstrecke 6, 7 abgewandten Seite der Führungsbahn 5 vorgesehen ist. Hierdurch liegen die Austauschabschnitte 13 auf einer äußeren Seite der Gebindebildevorrichtung und sind daher von außen gut zugänglich.

Über diesen Austauschabschnitt 13 ist es möglich, bereits in der Führungsbahn 5 angeordnete Führungselemente 3 zu entnehmen und durch neue Führungselemente 3 zu ersetzen. Dies erfolgt bevorzugt bei einer Anordnung der Führungselemente 3 in Transportgruppen 4, wobei der Austauschabschnitt 13 hierzu verfahren wird und wobei nach einem Verfahren des Austauschabschnittes 13 in eine Austauschposition zumindest zwei Transportgruppen 4 mit Führungselementen 3 entnommen werden können.

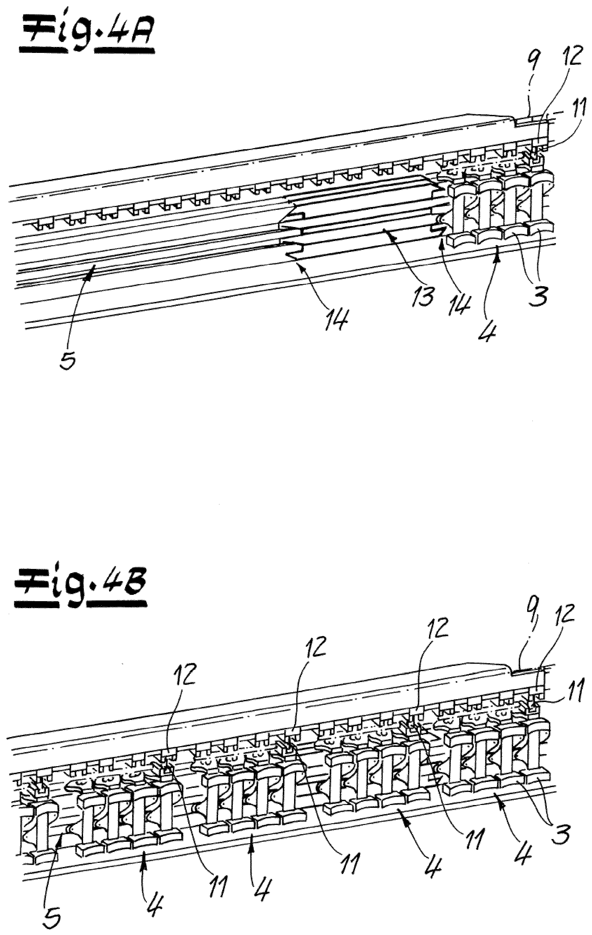

Die genaue Vorgehensweise wird anhand der Fig. 3A bis 3D und 4A, 4B deutlich.

Gemäß der Fig. 3A sind Transportgruppen 4 mit jeweils vier Führungselementen 3 umlaufend in der Führungsbahn 5 angeordnet, wobei zwischen den einzelnen Transportgruppen 4 ein geringfügiger aber deutlich sichtbarer Abstand vorliegt. Der Abstand der Führungselemente 3 innerhalb einer Transportgruppe 4 ist hierbei kleiner als der Abstand zwischen den Transportgruppen 4.

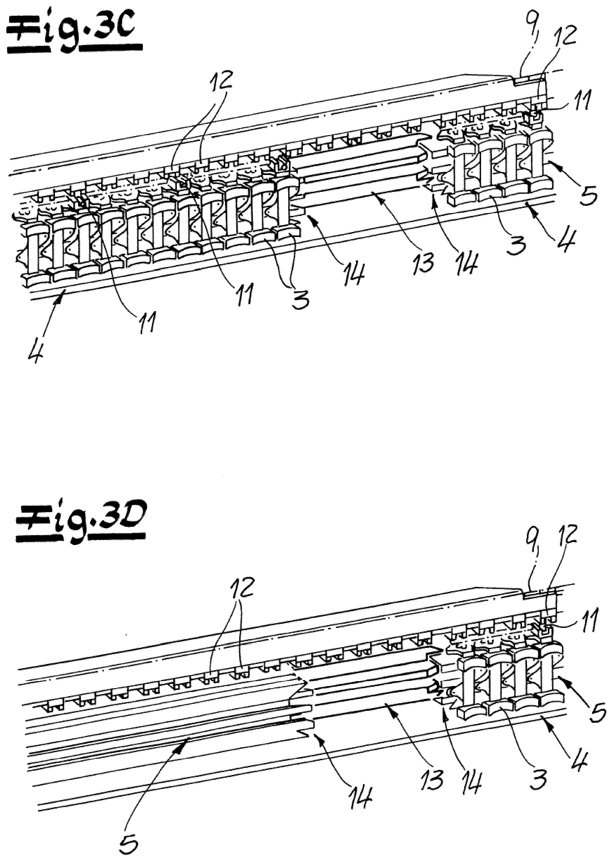

Gemäß der Fig. 3B werden sodann für einen ersten Teil der Transportgruppen 4 die verstellbaren Bolzenabschnitte 11 umgeklappt und von dem Transportriemen 9 gelöst. Entsprechend können die Transportgruppen 4 frei zueinander verfahren werden. Insbesondere ist es möglich, die Transportgruppen 4 unmittelbar aneinander anliegen zu lassen, sodass der zuvor erwähnte Abstand zwischen den einzelnen Transportgruppen 4 nicht mehr vorliegt. Sofern ein gewisser Anteil der Transportgruppen 4 zueinander verschoben wurde, liegt der Austauschabschnitt 13 frei und kann gemäß der Fig. 3C nach innen bewegt werden, sodass die angrenzenden Abschnitte 14 der Führungsbahn 5 gegenüber dem Austauschabschnitt 13 vorstehen. Der Austauschabschnitt 13 befindet sich somit gemäß der Fig. 3C in einer Austauschposition, wohingegen der Austauschabschnitt 13 gemäß der Fig. 2 in einer Betriebsposition dargestellt ist, bei der die Führungsbahn 5 durchgehend geschlossen ist.

Gemäß der Fig. 3D kann dann der bereits von der Antriebseinrichtung 8 gelöste Teil der Transportgruppen 4 unmittelbar aus der Führungsbahn 5 herausgeschoben werden. Der Austauschabschnitt 13 wird hierbei von den Transportgruppen 4 bzw. den Führungselementen 3 nicht befahren. Sodann können neue Führungselemente 3 in die Führungsbahn 5 eingesetzt werden, wobei anschließend der Austauschabschnitt 13 gemäß der Fig. 4A von der Austauschposition durch Verschieben nach außen in die Betriebsposition bewegt wird. Die Transportgruppen 4 werden in die gewünschte Position gebracht und die verstellbaren Bolzenabschnitte 11 mit den Kupplungselementen 12 des Transportriemens 9 verbunden.

Die Figuren 3A bis 3D und 4A, 4B illustrieren einen sogenannten Austauschschritt, wobei der Austauschschritt mehrfach wiederholt werden kann, um sämtliche Transportgruppen 4 austauschen zu können. Vorzugsweise sind insgesamt drei Austauschschritte vorgesehen, wobei pro Austauschschritt jeweils ein Drittel der Transportgruppen 4 entnommen wird.

## Patentansprüche

1. Gebindebildevorrichtung mit zwei einander gegenüberliegenden Transporteinrichtungen (1, 2), wobei die Transporteinrichtungen (1, 2) ausgebildet sind, Behälter mittels jeweils einer Vielzahl umlaufend bewegbarer Führungselemente (3) zu Gebinden zu gruppieren und entlang parallel zueinander angeordneter Transportstrecken (6, 7) zu bewegen, wobei die Führungselemente (3) entlang einer umlaufenden Führungsbahn (5) der Transporteinrichtungen (1, 2) bewegbar sind,
**dadurch gekennzeichnet, dass**
die Führungsbahnen (5) jeweils einen zwischen einer Austauschposition und einer Betriebsposition verstellbaren Austauschabschnitt (13) zum Austausch von Führungselementen (3) aufweisen, wobei der Austauschabschnitt (13) in der Austauschposition gegenüber angrenzenden Abschnitten (14) der umlaufenden Führungsbahnen (5) nach innen versetzt angeordnet ist.

2. Gebindebildevorrichtung nach Anspruch 1, **dadurch gekennzeichnet, dass** der Austauschabschnitt (13) jeweils auf einer der jeweiligen Transportstrecke (6, 7) abgewandten Seite der Führungsbahn (5) gebildet ist.

3. Gebindebildevorrichtung nach Anspruch 1 oder 2, **dadurch gekennzeichnet, dass** der Austauschabschnitt (13) eine Länge aufweist, welche zwischen 3 und 10 % der Länge der Führungsbahn (5) entspricht.

4. Gebindebildevorrichtung nach einem der voranstehenden Ansprüche, **dadurch gekennzeichnet, dass** der Austauschabschnitt (13) eine Länge zwischen dem 0,8-fachen und 1,5-fachen der Breite einer Transportgruppe (4) umfasst, welche aus mehreren, insbesondere zwei, drei oder vier hintereinander angeordneten Führungselementen (3) gebildet ist.

5. Gebindebildevorrichtung nach einem der voranstehenden Ansprüche, **dadurch gekennzeichnet, dass** in der jeweiligen Transporteinrichtung (1, 2) die Führungselemente (3) mit einer Antriebseinrichtung (8) verbunden sind.

6. Gebindebildevorrichtung nach Anspruch 5, **dadurch gekennzeichnet, dass** die Führungselemente (3) zumindest teilweise mit einem verstellbaren Bolzen oder einem verstellbaren Bolzenabschnitt (11) mit der Antriebseinrichtung (8) verbunden sind.

7. Gebindebildevorrichtung nach Anspruch 5 oder 6, **dadurch gekennzeichnet, dass** die Antriebseinrichtungen (8) als Zahnriemenantrieb oder als Kettenantrieb ausgebildet sind.

8. Gebindebildevorrichtung nach einem der voranstehenden Ansprüche, **dadurch gekennzeichnet, dass** die Führungselemente (3) in Transportgruppen (4) gruppiert sind, wobei die Führungselemente (3) innerhalb der Transportgruppen (4) vorzugsweise miteinander verbunden sind.

9. Gebindebildevorrichtung nach einem der voranstehenden Ansprüche, **dadurch gekennzeichnet, dass** jeweils zwischen 50 und 150, bevorzugt zwischen 80 und 120 Führungselemente (3) in den Transporteinrichtungen (6, 7) angeordnet sind.

10. Gebindebildevorrichtung nach einem der voranstehenden Ansprüche, **dadurch gekennzeichnet, dass** der Austauschabschnitt (13) aus einem Kunststoffmaterial gebildet ist.

11. Gebindebildevorrichtung nach einem der voranstehenden Ansprüche, **dadurch gekennzeichnet, dass** den Transporteinrichtungen (6, 7) jeweils eine Klebstoffapplikationseinrichtung zum Aufbringen eines Klebstoffes auf die Behälter in Produktionsrichtung vorgeschaltet ist.

12. Verfahren zum Austausch von aus Führungselementen (3) gebildeten Transportgruppen (4) in einer Gebindebildevorrichtung nach einem der voranstehenden Ansprüche, wobei der Austauschabschnitt (13) gegenüber angrenzenden Abschnitten (14) der Führungsbahn (5) aus der Betriebsposition in die Austauschposition verstellt wird und wobei anschließend zumindest zwei Transportgruppen (4) aus der Führungsbahn (5) entnommen und/oder in die Führungsbahn (5) eingesetzt werden.

13. Verfahren nach Anspruch 12, wobei zumindest die zu entnehmenden Transportgruppen (4) vor der Entnahme von einer Antriebseinheit (8) gelöst und so zueinander verschoben werden, dass der Austauschabschnitt (13) der Führungsbahn (5) freiliegt.

14. Verfahren nach Anspruch 13, **dadurch gekennzeichnet, dass** der Austauschabschnitt (13) nach Abschluss eines Austauschschrittes wieder in die Betriebsposition bewegt wird.

15. Verfahren nach Anspruch 14, **dadurch gekennzeichnet, dass** zum Austausch der Führungselemente (3) mehrere Austauschschritte hintereinander durchgeführt werden.

16. Verfahren nach einem der Ansprüche 12 bis 15, wobei eine erste Art von Transportgruppen (4) aus der Führungsbahn (5) entnommen und eine zweite Art von Transportgruppen (4) in die Führungsbahn (5) eingebracht wird.

17. Verfahren nach Anspruch 13 oder 14, wobei sich die erste Art von Transportgruppen (4) von der zweiten Art der Transportgruppen (4) hinsichtlich der Anzahl und/oder der Ausgestaltung der Führungselemente (3) voneinander unterscheiden.

## Claims

1. Package forming device comprising two transport devices (1, 2) which lie opposite each other, wherein the transport devices (1, 2) are designed to group containers into packages, in each case by means of a plurality of guide elements (3), which can be moved in a circulating manner, and to move the containers along transport paths (6, 7) arranged parallel to one another, wherein the guide elements (3) can move along a circumferential guide path (5) of the transport devices (1, 2),
**characterised in that**
the guide paths (5) each have an exchange section (13) which can be adjusted between an exchange position and an operation position for the exchange of guide elements (3), wherein in the exchange position, the exchange section (13) is offset inwards with respect to adjacent sections (14) of the circumferential guide paths (5).

2. Package forming device according to claim 1, **characterised in that** the exchange section (13) in each case is formed on a side of the guide path (5) facing away from the particular transport path (6, 7).

3. Package forming device according to claim 1 or 2, **characterised in that** the exchange section (13) is of a length corresponding to between 3 and 10% of the length of the guide path (5).

4. Package forming device according to one of the previous claims, **characterised in that** the exchange section (13) comprises a length between 0.8 times and 1.5 times the width of a transport group (4), which is formed of a plurality of consecutive guide elements (3), in particular two, three or four.

5. Package forming device according to one of the previous claims, **characterised in that** in the particular transport device (1, 2) the guide elements (3) are connected to a drive device (8).

6. Package forming device according to claim 5, **characterised in that** the guide elements (3) are connected at least in part to the drive device (8) by an adjustable bolt or an adjustable bolt section (11).

7. Package forming device according to claim 5 or 6, **characterised in that** the drive devices (8) are designed as a toothed belt drive or as a chain drive.

8. Package forming device according to one of the previous claims, **characterised in that** the guide elements (3) are grouped into transport groups (4), wherein the guide elements (3) are preferably connected to each other within the transport groups (4).

9. Package forming device according to one of the previous claims, **characterised in that** in each case between 50 and 150, preferably between 80 and 120 guide elements (3) are arranged in the transport devices (6, 7).

10. Device according to one of the previous claims, **characterised in that** the exchange section (13) is made of a synthetic material.

11. Package forming device according to one of the previous claims, **characterised in that** an adhesive application device to apply an adhesive to the containers is positioned before the transport devices (6, 7) in the production direction.

12. Method for exchanging transport groups (4) formed of guide elements (3) in a package forming device according to one of the previous claims, wherein the exchange section (13) is adjusted relative to adjacent sections (14) of the guide path (5) from the operation position into the exchange position and wherein then at least two transport groups (4) are removed from the guide path (5) and/or inserted into the guide path (5).

13. Method according to claim 12, wherein before at least the transport groups (4) to be removed are released from a drive unit (8) before removal and pushed together such that the exchange section (13) of the guide path (5) is bare.

14. Method according to claim 13, **characterised in that** the exchange section (13) is moved back into the operating position after completion of an exchange step.

15. Method according to claim 14, **characterised in that** to exchange the guide elements (3) a plurality of exchange steps are carried out in succession.

16. Method according to one of claims 12 to 15, wherein a first kind of transport group (4) is removed from the guide path (5) and a second kind of transport group (4) is inserted into the guide path (5).

17. Method according to claim 13 or 14, wherein the first kind of transport group (4) differs from the second kind of transport group (4) in terms of the number and/or the embodiment of the guide elements (3).

## Revendications

1. Dispositif de formation de paquets avec deux systèmes de transport (1, 2) se faisant face l'un l'autre, dans lequel les systèmes de transport (1, 2) sont réalisés pour regrouper des contenants en paquets au moyen respectivement d'une pluralité d'éléments de guidage (3) pouvant être déplacés en périphérie et les déplacer le long de tronçons de transport (6, 7) disposés parallèlement les uns aux autres, dans lequel les éléments de guidage (3) peuvent être déplacés le long d'une piste de guidage (5) périphérique des systèmes de transport (1, 2),
**caractérisé en ce que**
les pistes de guidage (5) présentent chacune une section d'échange (13) pouvant être ajustée entre une position d'échange et une position de fonctionnement pour le remplacement d'éléments de guidage (3), dans lequel la section d'échange (13) est disposée dans la position d'échange de manière décalée vers l'intérieur par rapport à des sections (14) adjacentes des pistes de guidage (5) périphériques.

2. Dispositif de formation de paquets selon la revendication 1, **caractérisé en ce que** la section d'échange (13) est formée respectivement sur un côté opposé au tronçon de transport (6, 7) respectif de la voie de guidage (5).

3. Dispositif de formation de paquets selon la revendication 1 ou 2, **caractérisé en ce que** la section d'échange (13) présente une longueur qui correspond entre 3 et 10 % de la longueur de la piste de guidage (5).

4. Dispositif de formation de paquets selon l'une quelconque des revendications précédentes, **caractérisé en ce que** la section d'échange (13) comprend une longueur comprise entre 0,8 fois et 1,5 fois la largeur d'un groupe de transport (4), qui est formé à partir de plusieurs, en particulier de deux, trois ou quatre éléments de guidage (3) disposés les uns derrière les autres.

5. Dispositif de formation de paquets selon l'une quelconque des revendications précédentes, **caractérisé en ce que** dans le système de transport (1, 2) respectif, les éléments de guidage (3) sont reliés à un système d'entraînement (8).

6. Dispositif de formation de paquets selon la revendication 5, **caractérisé en ce que** les éléments de guidage (3) sont reliés au moins en partie au système d'entraînement (8) par un boulon ajustable ou une section de boulon (11) ajustable.

7. Dispositif de formation de paquets selon la revendication 5 ou 6, **caractérisé en ce que** les systèmes d'entraînement (8) sont réalisés en tant qu'entraînement par courroie dentée ou en tant qu'entraînement par chaîne.

8. Dispositif de formation de paquets selon l'une quelconque des revendications précédentes, **caractérisé en ce que** les éléments de guidage (3) sont regroupés en des groupes de transport (4), dans lequel les éléments de guidage (3) sont de préférence reliés entre eux au sein des groupes de transport (4).

9. Dispositif de formation de paquets selon l'une quelconque des revendications précédentes, **caractérisé en ce que** respectivement entre 50 et 150, de manière préférée entre 80 et 120 éléments de guidage (3) sont disposés dans les systèmes de transport (6, 7).

10. Dispositif de formation de paquets selon l'une quelconque des revendications précédentes, **caractérisé en ce que** la section d'échange (13) est formée à partir d'un matériau en matière plastique.

11. Dispositif de formation de paquets selon l'une quelconque des revendications précédentes, **caractérisé en ce que** respectivement un système d'application de colle destiné à appliquer une colle sur les contenants est installé en amont des systèmes de transport (6, 7) dans la direction de production.

12. Procédé de remplacement de groupes de transport (4) formés à partir d'éléments de guidage (3) dans un dispositif de formation de paquets selon l'une quelconque des revendications précédentes, dans lequel la section d'échange (13) est ajustée de la position de fonctionnement dans la position d'échange par rapport à des sections (14) adjacentes de la piste de guidage (5) et dans lequel au moins deux groupes de transport (4) sont ensuite retirés de la piste de guidage (5) et/ou sont insérés dans la piste de guidage (5).

13. Procédé selon la revendication 12, dans lequel au moins les groupes de transport (4) à retirer sont détachés avant le retrait d'une unité d'entraînement (8) et sont coulissés les uns par rapport aux autres de telle sorte que la section d'échange (13) de la piste de guidage (5) est exposée.

14. Procédé selon la revendication 13, **caractérisé en ce que** la section d'échange (13) est déplacée dans la position de fonctionnement après la fin d'une étape de remplacement.

15. Procédé selon la revendication 14, **caractérisé en ce que** plusieurs étapes de remplacement sont effectuées successivement pour remplacer les éléments de guidage (3).

16. Procédé selon l'une quelconque des revendications 12 à 15, dans lequel un premier type de groupes de transport (4) est retiré de la piste de guidage (5) et un deuxième type de groupes de transport (4) est introduit dans la piste de guidage (5).

17. Procédé selon la revendication 13 ou 14, dans lequel le premier type de groupes de transport (4) diffère du deuxième type de groupes de transport (4) en ce qui concerne le nombre et/ou la configuration des éléments de guidage (3).
